Europäisches Patentamt

European Patent Office

Office européen des brevets

(11) Veröffentlichungsnummer: **0 297 255 B1**

(12) **EUROPÄISCHE PATENTSCHRIFT**

(45) Veröffentlichungstag der Patentschrift: **07.10.92**

(21) Anmeldenummer: **88107577.4**

(22) Anmeldetag: **11.05.88**

(51) Int. Cl.⁵: **C03C 3/091**, C03C 3/093, C03C 3/118, C03C 4/20

(54) **Borosilikatglas.**

(30) Priorität: **02.07.87 DE 3722130**

(43) Veröffentlichungstag der Anmeldung:
**04.01.89 Patentblatt 89/01**

(45) Bekanntmachung des Hinweises auf die Patenterteilung:
**07.10.92 Patentblatt 92/41**

(84) Benannte Vertragsstaaten:
**DE FR GB IT**

(56) Entgegenhaltungen:
**CH-A- 390 474
FR-A- 2 542 727
US-A- 3 216 808
US-A- 3 984 252**

**CHEMICAL ABSTRACTS, Band 98, Nr. 12, März 1983, Seite 300, Zusammenfassung Nr. 94504r, Columbus, Ohio, US; & SU-A-958 352 (ALL-UNION SCIENTIFIC-RESEARCH INSTITUTE OF MEDICAL POLYMERS) 15-09-1982**

(73) Patentinhaber: **Schott Glaswerke
Hattenbergstrasse 10
W-6500 Mainz 1(DE)**

(84) Benannte Vertragsstaaten:
**DE FR IT**

(73) Patentinhaber: **Carl-Zeiss-Stiftung trading as SCHOTT GLASWERKE
Hattenbergstrasse 10
W-6500 Mainz 1(DE)**

(84) Benannte Vertragsstaaten:
**GB**

(72) Erfinder: **Kiefer, Werner, Dr. Dipl.-Chem.
Jupiterweg 19
W-6500 Mainz-Finthen(DE)**

(74) Vertreter: **Wablat, Wolfgang, Dr.Dr.
Potsdamer Chaussee 48
W-1000 Berlin 38(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue Borosilikatgläser.

Aus der Fachliteratur sind zahlreiche Borosilikatgläser mit einem hohen Prozentsatz an Kieselsäure (70-80 %), einem Anteil an Borsäure (7-13 %), Alkalioxiden ($Na_2O$, $K_2O$, 4-8 %) und Aluminiumoxid (2-7 %) sowie gegebenenfalls Erdalkalioxiden (CaO, BaO, 0-5 %) bekannt. Kennzeichnende Eigenschaften dieser Gläser sind hohe chemische Beständigkeit (hydrolytische Klasse 1, Säureklasse 1), geringe Wärmeausdehnung und hohe Temperaturbelastbarkeit.

Beispielsweise ist in der US-PS 4 386 164 ein Borosilikatglas folgender Zusammensetzung beschrieben:

| | |
|---|---|
| $SiO_2$ | 70 bis 74 Gew.-% |
| $B_2O_3$ | 9 bis 13 Gew.-% |
| $Al_2O_3$ | 5 bis 8 Gew.-% |
| $Na_2O$ | 5 bis 8 Gew.-% |
| $K_2O$ | 0 bis 4 Gew.-% |
| CaO | 0 bis 3 Gew.-% |
| MgO | 0 bis 1 Gew.-% |

Dieses Glas weist die gewünschte gute chemische Beständigkeit und Temperaturbeständigkeit auf, um es im Laborbereich einzusetzen. Es eignet sich aber nicht für andere Einsatzzwecke, wie beispielsweise als Hauswirtschaftsglas, Lampenglas oder Röntgenröhrenglas.

Aufgabe der Erfindung ist es, ein vielseitig verwendbares Glas, das sich als Laborglas, Hauswirtschaftsglas, pharmazeutisches Behälterglas, Lampenglas und Röntgenröhrenglas verwenden läßt, zur Verfügung zu stellen.

Diese Aufgabenstellung verlangt, daß alle Anforderungen erfüllt werden müssen, die von den verschiedenen Verwendern der Gläser gefordert werden.

Von Laborgläsern und Haushaltsgerätegläsern, wie z.B. Kaffeekrügen und Heißwasserbehältern wird erwartet, daß sie eine gute chemische Resistenz und Temperaturwechselfestigkeit besitzen. Die Gläser müssen in der ersten hydrolytischen Klasse nach DIN 12111, in der ersten Säureklasse nach DIN 12116 und in der zweiten Laugenklasse nach DIN 52322 liegen. Die Anforderungen an die Temperaturwechselfestigkeit hängen vom Einsatzgebiet der Gläser ab. Ein bekanntes Borosilikatglas, das DURAN®-Glas 8330 der Firma SCHOTT GLASWERKE mit einer Wärmeausdehnung von $3,25 \times 10^{-6}$ $K^{-1}$, besitzt eine Temperaturwechselfestigkeit von 180 bis 200 K. Die an Wolframmetall angepaßten Borosilikatgläser, wie beispielsweise das SUPRAX®-Glas 8486 der Firma SCHOTT GLASWERKE mit einer Wärmeausdehnung von $4,1 \times 10^{-6}$ $K^{-1}$, weisen eine Temperaturwechselfestigkeit von 140 bis 150 K auf. Für viele Laborglasbehälter und für die meisten Gläser, die in der Haustechnik Eingang finden, reicht eine Temperaturwechselbeständigkeit von über 110 K aus. Für Borosilikatgläser bedeutet dies eine Wärmeausdehnung von $< 5,2 \times 10^{-6}$ $K^{-1}$.

Gläser für pharmazeutische Behälter müssen ebenfalls der ersten hydrolytischen Klasse angehören. Es ist wünschenswert, daß sie ebenfalls in der ersten Säureklasse liegen, wie beispielsweise FIOLAX® 8412 der Firma SCHOTT GLASWERKE. Besonders unerwünscht ist das Herauslösen von BaO, da bereits geringe Spuren zum Ausfällen von Pharmaprodukten mit Sulfatgruppen führen können. In den Gläsern nach der Lehre der bereits zitierten US-PS 4 386 164 wird dieses Problem durch den Ersatz von BaO durch $K_2O$ gelöst. Dieser Austausch hat jedoch den Nachteil, daß die Gläser nur noch den Anforderungen der zweiten Säureklasse genügen und außerdem ihre Wärmeausdehnung ansteigt.

Gläser für Röntgenröhren sollen eine minimale Röntgenabsorption besitzen, um eine Schwächung der austretenden Röntgenstrahlen zu vermeiden. Weiterhin muß das Röntgenrohrglas für die Einschmelzung von Molybdän und Ni-Fe-Co-Legierungen (Kovar) geeignet sein, wie beispielsweise das KOVAR®-Glas 8245 der Firma SCHOTT GLASWERKE. Dies bedeutet, daß die Wärmeausdehnung bei etwa $5 \times 10^{-6}$ $K^{-1}$ liegen muß.

Sowohl für die Röntgenrohrgläser als auch für die Lampengläser ist eine möglichst hohe Transformationstemperatur wünschenswert. Die Röntgenrohrgläser müssen bei möglichst hohen Temperaturen ausgeheizt werden, während in der Lampenindustrie ständig höhere Lichtausbeuten angestrebt werden, was zu einer stärkeren Beanspruchung der Lampen führt.

Aus den verschiedenen Verwendungszwecken ergeben sich die folgenden Anforderungen an die Eigenschaften des neuen Glases:

2

- hydrolytische Beständigkeit nach DIN 12111: 1. Klasse
- Säurebeständigkeit nach DIN 12116: 1. Klasse
- Laugenbeständigkeit nach DIN 52322: 2. Klasse
- lineare Wärmeausdehnung alpha (20 - 300°C): 4,3 - 5,0 x $10^{-6}$ $K^{-1}$
- Temperaturwechselbeständigkeit: $\geq$ 110 K
- Röntgenabsorption $\mu$ bei 0,6 Å: $\leq$ 5,3 $cm^{-1}$
- Transformationstemperatur Tg: 535 bis 570°C
- Verarbeitungstemperatur $V_A$: 1140 bis 1220°C.

Erfindungsgemäß wurde die Aufgabe durch ein Borosilikatglas gelöst, welches der ersten hydrolytischen Klasse nach DIN 12111, der ersten Säureklasse nach DIN 12116 und der zweiten Laugenklasse nach DIN 52322 angehört, eine lineare Wärmeausdehnung zwischen 20°C und 300°C von 4,3 bis 5,0 x $10^{-6}$ $K^{-1}$, eine Transformationstemperatur von 535 bis 570°C, eine Verarbeitungstemperatur von 1140 bis 1220°C und eine Röntgenabsorption bei 0,6 Å von < 5,20 $cm^{-1}$ besitzt, sowie die Zusammensetzung

| | |
|---|---|
| $SiO_2$ | 74,5 bis 76,5 Gew.-% |
| $B_2O_3$ | 10,0 bis 12,0 Gew.-% |
| $Al_2O_3$ | 3,5 bis 6,0 Gew.-% |
| $Na_2O$ | 6,0 bis 8,0 Gew.-% |
| CaO | 1,0 bis 2,0 Gew.-% |
| $ZrO_2$ | 0 bis 0,50 Gew.-% |
| F | 0 bis 1,0 Gew.-% |

aufweist, wobei $As_2O_3$ und/oder $Sb_2O_3$ und/oder NaCl als Läutermittel dienen.

Ein erfindungsgemäß bevorzugtes Borosilikatglas hat folgende Zusammensetzung:

| | |
|---|---|
| $SiO_2$ | 75,25 Gew.-% |
| $B_2O_3$ | 11,00 Gew.-% |
| $Al_2O_3$ | 5,10 Gew.-% |
| $Na_2O$ | 7,00 Gew.-% |
| CaO | 1,40 Gew.-% |
| F | 0,25 Gew.-% |

wobei als Läutermittel $As_2O_3$ und/oder $Sb_2O_3$ dienen.

Um ein Borsilikatglat mit einer minimalen Röntgenabsorption zu erhalten, wurde auf die schweren Elemente, wie beispielsweise $K_2O$, BaO und ZnO verzichtet.

Untersuchungen ergaben, daß unter diesen Voraussetzungen die geforderte chemische Beständigkeit nur schwer zu erhalten ist. Es zeigte sich, daß der $SiO_2$-Gehalt nicht unter 74,5 Gew.-% fallen darf, da sonst das Glas von der ersten in die zweite Säureklasse absinkt. Eine Erhöhung des $SiO_2$-Gehaltes über einen Anteil von 76,5 Gew.-% hinaus führt dagegen zu einem starken Anstieg der Verarbeitungstemperatur.

Der $B_2O_3$-Gehalt soll 12 Gew.-% nicht überschreiten, da sonst das Glas in die zweite Säureklasse übergeht. Ein Absinken des $B_2O_3$-Gehaltes unter 10 Gew.-% bedingt im Austausch mit $SiO_2$ eine Erhöhung des $V_A$-Wertes auf über 1200°C.

Der $Al_2O_3$-Gehalt soll 6 Gew.-% nicht überschreiten, da sonst die Verarbeitungstemperatur zu stark ansteigt. Ein Absinken des $Al_2O_3$-Gehaltes unter 3,5 Gew.-% muß ebenfalls vermieden werden, da sonst leicht Entmischung auftreten kann.

Die Wärmeausdehnung und die Transformationstemperatur und damit die Verschmelzbarkeit mit Molybdän bzw. Ni-Fe-Co-Legierungen werden sehr stark durch den $Na_2O$- und CaO-Gehalt bestimmt. Durch den Einbau von CaO wird die Säurebeständigkeit und die Transformationstemperatur erhöht. Es hat sich gezeigt, daß der CaO-Gehalt 1 Gew.-% nicht unterschreiten darf, da sonst die erste Säureklasse nicht gehalten werden kann. Bei einem Anteil von über 2 Gew.-% CaO beginnt sich das Glas zu entmischen und wird trübe.

Eine gute hydrolytische Beständigkeit sowie eine gute Säurebeständigkeit werden meist durch Ausnutzen der Mischalkali- bzw. Mischerdalkalieffekte erreicht. Es war daher überraschend, daß das Glas bei einem $Na_2O$-Gehalt zwischen 6 und 8 Gew.-% ohne Zusatz von $K_2O$ in der ersten hydrolytischen Klasse gehalten werden konnte.

Durch Zugabe kleiner Mengen $ZrO_2$ wird die Laugenbeständigkeit stark verbessert, ohne daß die hydrolytische Beständigkeit und die Säurebeständigkeit leiden. Da ZrO$_2$ die Röntgenabsorption und die Kristallisationsneigung stark erhöht, sollten 0,50 Gew.-% nicht überschritten werden.

Die Zugabe von Fluor dient zur Schmelzerleichterung und zum Absenken der V$_A$-Temperatur.

## Beispiele

In der nachfolgenden Tabelle 1 sind Zusammensetzungen (in Gew.-%) und Eigenschaften bekannter Gläser zusammengestellt. Die Aufstellung zeigt, daß keines der bekannten Gläser die Summe der geforderten Eigenschaften erfüllt.

Die Tabelle 2 enthält Beispiele der erfindungsgemäßen Zusammensetzung. Die Gläser wurden in Quarztiegeln bei 1620°C eingeschmolzen und bei 1580°C geläutert.

Die lineare Wärmeausdehnung wurde zwischen 20°C und 300°C gemessen. Die Erweichungstemperatur E$_W$ ist die Temperatur, bei der das Glas eine Viskosität von $10^{7,6}$ dPas besitzt.

Entsprechend ist die Verarbeitungstemperatur V$_A$ die Temperatur, bei der das Glas eine Viskosität von $10^4$ dPas aufweist. Der Röntgenabsorptionskoeffizient wurde für 0,6 Å aus Synthese und Dichte berechnet.

Die Temperaturwechselfestigkeit TWB wurde nach der folgenden Formel bestimmt:

$$TWB = \sigma \cdot (1 - \mu) / (\alpha \cdot E),$$

wobei

$\sigma$ = Biegezugfestigkeit mit 50 N/mm$^2$,

$\mu$ = Poisson-Zahl mit 0,20 und

E = Elastizitätsmodul mit 73 x 10$^3$ N/mm$^2$

angenommen wurden.

TABELLE 1

| | 8330 "DURAN" SCHOTT | 8468 "SUPRAX" SCHOTT | 8412 "FIOLAX" SCHOTT | US-PS 4386164 | 8245 "KOVAR" SCHOTT |
|---|---|---|---|---|---|
| | (1) | (2) | (3) | (4) | (5) |
| $SiO_2$ | 80,0 | 75,5 | 74,7 | 71,8 | 69,0 |
| $B_2O_3$ | 13,0 | 11,5 | 10,0 | 11,5 | 17,0 |
| $Al_2O_3$ | 2,5 | 4,0 | 5,0 | 6,8 | 5,0 |
| $Li_2O$ | | | | | 0,5 |
| $Na_2O$ | 3,5 | 4,0 | 6,5 | 6,4 | 7,0 |
| $K_2O$ | 1,0 | 1,0 | | 2,7 | 0,5 |
| MgO | | 0,5 | | 0,2 | |
| CaO | | 1,0 | 1,5 | 0,5 | |
| BaO | | 2,5 | 2,0 | | |
| ZnO | | | | | 1,0 |
| F | | | 0,3 | | |
| Summe | 100,0 | 100,0 | 100,0 | 99,9 | 100,0 |
| $\alpha_{20/300} \times 10^{-6}$ $K^{-1}$ | 3,25 | 4,1 | 4,9 | 5,4 | 5,15 |
| Dichte $g/cm^3$ | 2,23 | 2,34 | 2,39 | 2,34 | 2,31 |
| Tg $°C$ | 530 | 550 | 560 | | 505 |
| Kühltemp. $°C$ | 560 | 570 | 565 | 560 | 518 |
| $E_W$ $°C$ | 815 | 805 | 783 | 782 | 710 |
| $V_A$ $°C$ | 1270 | 1230 | 1160 | 1135 | 1040 |
| Röntgenabs. 0,6 Å $cm^{-1}$ | 4,81 | 6,57 | 6,38 | 5,41 | 5,31 |
| Hydrol. Best. Kl. | 1 | 1 | 1 | 1 | 2/3 |
| Säure-Best. Kl. | 1 | 1 | 1 | 2 | 3 |
| Laugen-Best. Kl. | 2 | 2 | 2 | 2 | 3 |
| TWB K | 192 | 147 | 111 | 101 | 114 |
| E-Modul x $10^3$ $N/mm^2$ | 63 | 66 | 73 | 73* | 68 |
| Poissonzahl $\mu$ | 0,20 | 0,20 | 0,20 | 0,20* | 0,22 |

* = angenommene Werte

5

TABELLE 2

| | 1 | 2 | 3 | 4 | 5 | 6 |
|---|---|---|---|---|---|---|
| $SiO_2$ | 74,70 | 75,25 | 75,50 | 75,20 | 76,20 | 76,15 |
| $B_2O_3$ | 11,00 | 10,50 | 11,00 | 12,00 | 11,00 | 11,00 |
| $Al_2O_3$ | 5,60 | 5,35 | 5,10 | 5,10 | 5,10 | 4,25 |
| $Na_2O$ | 7,00 | 7,00 | 7,00 | 6,00 | 6,00 | 7,80 |
| CaO | 1,40 | 1,50 | 1,40 | 1,40 | 1,40 | -- |
| F | 0,30 | 0,20 | -- | 0,30 | 0,30 | 0,30 |
| $ZrO_2$ | -- | -- | -- | -- | -- | 0,50 |
| $\alpha_{20/300} \times 10^{-6}\ K^{-1}$ | 4,84 | 4,75 | 4,81 | 4,36 | 4,40 | 4,99 |
| Dichte $g/cm^3$ | 2,35 | 2,35 | 2,32 | 2,29 | 2,31 | 2,34 |
| Tg °C | 542 | 549 | 569 | 540 | 553 | 546 |
| $E_W$ °C | | | | 805 | 801 | 779 |
| $V_A$ °C | 1174 | 1163 | 1178 | 1197 | 1216 | 1146 |
| $\mu$ bei 0,6 Å $cm^{-1}$ | 5,15 | 5,15 | 5,15 | 5,06 | 5,12 | |
| TWB K | 114 | 116 | 114 | 126 | 125 | 110 |
| Hydrol. Best. Kl. | 1 | 1 | 1 | 1 | 1 | 1 |
| Säure-Best. Kl. | 1 | 1 | 1 | 1 | 1 | 1 |
| Laugen-Best. Kl. | 2 | 1 | 2 | 2 | 2 | 1 |

**Patentansprüche**

1. Borosilikatglas, dadurch gekennzeichnet, daß es die Zusammensetzung

| | |
|---|---|
| $SiO_2$ | 74,5 bis 76,5 Gew.-% |
| $B_2O_3$ | 10,0 bis 12,0 Gew.-% |
| $Al_2O_3$ | 3,5 bis 6,0 Gew.-% |
| $Na_2O$ | 6,0 bis 8,0 Gew.-% |
| CaO | 1,0 bis 2,0 Gew.-% |
| $ZrO_2$ | 0 bis 0,50 Gew.-% |
| F | 0 bis 1,0 Gew.-% |

aufweist, wobei $As_2O_3$ und/oder $Sb_2O_3$ und/oder NaCl als Läutermittel dienen.

2. Borosilikatglas nach Anspruch 1, dadurch gekennzeichnet, daß es die Zusammensetzung

| | |
|---|---|
| $SiO_2$ | 75,25 Gew.-% |
| $B_2O_3$ | 11,00 Gew.-% |
| $Al_2O_3$ | 5,10 Gew.-% |
| $Na_2O$ | 7,00 Gew.-% |
| CaO | 1,40 Gew.-% |
| F | 0,25 Gew.-% |

aufweist, wobei als Läutermittel $As_2O_3$ und/oder $Sb_2O_3$ dienen.

3. Verwendung des Borosilikatglases nach Anspruch 1 und 2 zur Herstellung von Laborglas, Hauswirtschaftsglas, pharmazeutischem Behälterglas, Lampenglas und Röntgenröhrenglas.

**Claims**

1. Borosilicate glass, characterised in that it has the composition

6

| | |
|---|---|
| $SiO_2$ | 74.5 to 76.5 % by weight |
| $B_2O_3$ | 10.0 to 12.0 % by weight |
| $Al_2O_3$ | 3.5 to 6.0 % by weight |
| $Na_2O$ | 6.0 to 8.0 % by weight |
| CaO | 1.0 to 2.0 % by weight |
| $ZrO_2$ | 0 to 0.50% by weight |
| F | 0 to 1.0 % by weight |

where $As_2O_3$ and/or $Sb_2O_3$ and/or NaCl serve as fining agent.

2. Borosilicate glass according to Claim 1, characterised in that it has the composition

| | |
|---|---|
| $SiO_2$ | 75.25 % by weight |
| $B_2O_3$ | 11.00 % by weight |
| $Al_2O_3$ | 5.10 % by weight |
| $Na_2O$ | 7.00 % by weight |
| CaO | 1.40 % by weight |
| F | 0.25 % by weight |

where $As_2O_3$ and/or $Sb_2O_3$ serve as fining agent.

3. Use of the borosilicate glass according to Claim 1 or 2 for the production of laboratory glass, tableware glass, pharmaceutical container glass, lamp glass and X-ray tube glass.

**Revendications**

1. Verre de borosilicate, caractérisé en ce qu'il présente la composition:

| | |
|---|---|
| $SiO_2$ | 74,5 à 76,5 % en poids |
| $B_2O_3$ | 10,0 à 12,0 % en poids |
| $Al_2O_3$ | 3,5 à 6,0 % en poids |
| $Na_2O$ | 6,0 à 8,0 % en poids |
| CaO | 1,0 à 2,0 % en poids |
| $ZrO_2$ | 0,0 à 0,50 % en poids |
| F | 0,0 à 1,0 % en poids, |

$As_2O_3$ et/ou $Sb_2O_3$ et/ou NaCl servant d'agents d'affinage.

2. Verre de borosilicate selon la revendication 1, caractérisé en ce qu'il présente la composition:

| | |
|---|---|
| $SiO_2$ | 75,25 % en poids |
| $B_2O_3$ | 11,00 % en poids |
| $Al_2O_3$ | 5,10 % en poids |
| $Na_2O$ | 7,00 % en poids |
| CaO | 1,40 % en poids |
| F | 0,25 % en poids, |

$As_2O_3$ et/ou $Sb_2O_3$ servant d'agents d'affinage.

3. Utilisation du verre de borosilicate selon la revendication 1, pour la fabrication de verre de laboratoire, de verre pour les ustensiles ménagers, de verre pour récipients pharmaceutiques, de verre de lampe et de verre pour tubes à rayons X.